# EUROPEAN PATENT APPLICATION

(11) **EP 4 725 838 A1**
(43) Date of publication of application: **15.04.2026**
(21) Application number: 24825702.4
(22) Date of filing: 03.06.2024
(51) Int. Cl.: B64C 25/22, B64C 9/00, F04C 11/00, F15B 11/042

(54) **AIRCRAFT HYDRAULIC SYSTEM AND INTERNAL GEAR PUMP FOR AIRCRAFT**

(30) Priority: 23.06.2023 JP 2023103442
(71) Applicant: Sumitomo Precision Products Co., Ltd., Amagasaki-shi, Hyogo 660-0891 (JP)
(72) Inventor: ONISHI, Takaaki, Amagasaki-shi, Hyogo 660-0891 (JP); HASEGAWA, Kazuomi, Amagasaki-shi, Hyogo 660-0891 (JP)
(74) Representative: BRP Renaud & Partner mbB Rechtsanwälte Patentanwälte Steuerberater
(86) International application number: PCT/JP2024/020179
(87) International publication number: WO 2024/262295

(57) **Abstract**

An aircraft hydraulic system (1) includes a hydraulic pump (7) connected to at least one hydraulic device (21 to 26) of an aircraft via a supply path (41) and that supplies hydraulic oil to the hydraulic device through the supply path, a prime mover (electric motor 5) coupled to the hydraulic pump and that drives the hydraulic pump, and a controller (6) electrically connected to the prime mover and that changes the rotational speed of the hydraulic pump according to a required flow rate for the hydraulic device via control of the prime mover, and the hydraulic pump is a multistage internal gear pump (70) having a plurality of gear sets (77), each of which includes a pinion gear (72) and a ring gear (74) engaging with each other, the internal gear pump being arranged such that a discharge portion of each stage is connected in series to a suction portion of a subsequent stage.

## Description

### TECHNICAL FIELD

The technique disclosed here relates to an aircraft hydraulic system and an aircraft internal gear pump.

### BACKGROUND ART

Patent Document 1 describes a conventional aircraft hydraulic system. The conventional hydraulic system includes a hydraulic cylinder that retracts a landing gear of an aircraft into an airframe and extends the landing gear from the airframe, a hydraulic motor that drives a wheel attached to the landing gear, and an electric hydraulic pump that supplies a hydraulic pressure to the hydraulic cylinder and the hydraulic motor. The electric hydraulic pump is, for example, a piston pump.

### CITATION LIST

### PATENT DOCUMENT

PATENT DOCUMENT 1: Japanese Unexamined Patent Publication No. 2014-132189

### SUMMARY OF THE INVENTION

### TECHNICAL PROBLEM

As described above, the conventional aircraft hydraulic system includes the piston pump. This is because for the hydraulic pump of the aircraft hydraulic system, performance requirements which are (1) high-pressure hydraulic oil can be supplied to a hydraulic device and (2) the hydraulic pump can be used over a wide flow rate range from a low flow rate to a high flow rate are made. Particularly, in a hydraulic system for a flight control actuator such as an aileron actuator, an elevator actuator, or a rudder actuator, it is strongly required for the hydraulic pump to satisfy the above-described performance requirements (1) and (2). The piston pump has a relatively-high volumetric efficiency and a variable capacity structure can be adopted thereto, and therefore, can satisfy the above-described performance requirements (1) and (2).

However, the piston pump has a complicated structure and is high in cost. Moreover, the piston pump has disadvantages that a sliding portion is easily abraded and the piston pump is relatively vulnerable to contamination.

Hydraulic pumps in forms other than the piston pump have not been adopted to the aircraft hydraulic system so far. This is because the hydraulic pumps in the forms other than the piston pump are difficult to satisfy the above-described performance requirements (1) and (2). For example, an internal gear pump has a simple structure, and is low in cost. Moreover, the internal gear pump has advantages that the material of a sliding portion has resistance to abrasion and the structure of the internal gear pump is less likely to be abraded due to forced lubrication and has resistance to contamination. However, the conventional internal gear pump is difficult to satisfy the above-described performance requirements (1) and (2).

The technique disclosed here provides an aircraft hydraulic system using an internal gear pump and an internal gear pump suitable for an aircraft hydraulic system.

### SOLUTION TO THE PROBLEM

The technique disclosed here relates to the aircraft hydraulic system. The aircraft hydraulic system includes
a hydraulic pump connected to at least one hydraulic device of an aircraft via a supply path and that supplies hydraulic oil to the hydraulic device through the supply path,
a prime mover coupled to the hydraulic pump and that drives the hydraulic pump, and
a controller electrically connected to the prime mover and that changes the rotational speed of the hydraulic pump according to a required flow rate for the hydraulic device via control of the prime mover, and
the hydraulic pump is a multistage internal gear pump having a plurality of gear sets, each of which includes a pinion gear and a ring gear engaging with each other, the internal gear pump being arranged such that a discharge portion of each stage is connected in series to a suction portion of a subsequent stage.

The above-described hydraulic system is a system for supplying hydraulic oil to the hydraulic device of the aircraft using the hydraulic pump. The hydraulic device may be a hydraulic actuator, a hydraulic motor, or both the hydraulic actuator and the hydraulic motor. The hydraulic pump is driven by the prime mover. The prime mover may be an engine or an electric motor. The hydraulic pump driven by the prime mover supplies hydraulic oil to the hydraulic device through the supply path.

The hydraulic pump is the internal gear pump. More specifically, the internal gear pump is the multistage internal gear pump having the plurality of gear sets and configured such that the ports of the plurality of gear sets are connected in series.

The multistage internal gear pump can supply high-pressure hydraulic oil to the hydraulic device. Generally, the internal gear pump has a lower efficiency under a high pressure as compared to a piston pump, and seizure occurs easily under a high pressure. However, the multistage internal gear pump increases the pressure using the plurality of gear sets, and therefore, a load on the gear sets is reduced. The multistage internal gear pump can reduce the occurrence of seizure.

The multistage internal gear pump whose rotational speed is changed can be used over a wide flow rate range from a low flow rate to a high flow rate. The multistage internal gear pump itself cannot change its discharge flow rate. However, by changing the rotational speed of the pump, the discharge flow rate of the multistage internal gear pump is changed. The rotational speed of the internal gear pump is changed by the controller. The controller changes the rotational speed of the multistage internal gear pump via control of the prime mover according to the required flow rate for the hydraulic device.

The aircraft hydraulic system including the multistage internal gear pump (1) can supply high-pressure hydraulic oil to the hydraulic device, and (2) can be used over a wide flow rate range from low to high.

The aircraft hydraulic system may further include
a bypass path directly or indirectly connected to the internal gear pump and that returns at least part of hydraulic oil from the internal gear pump to a tank so as to bypass the hydraulic device, and
a valve located on the bypass path and that opens the bypass path in a case where the required flow rate is low and closes the bypass path in a case where the required flow rate is high.

In a case where the hydraulic device is a flight control actuator, the hydraulic system may be required to maintain the pressure of hydraulic oil high while a supply flow rate for the hydraulic device is zero or substantially zero. Moreover, the high-pressure state with a supply flow rate of substantially zero may continue for a long period of time.

In a case where the required flow rate is low, when the valve opens the bypass path, at least part of hydraulic oil from the internal gear pump driven by the prime mover returns to the tank through the bypass path. During driving, the internal gear pump can maintain the pressure of hydraulic oil in the supply path high. Meanwhile, at least part of hydraulic oil bypasses the hydraulic device, and therefore, the flow rate of hydraulic oil supplied to the hydraulic device decreases. The hydraulic system can maintain the pressure of hydraulic oil high while the supply flow rate for the hydraulic device is zero or substantially zero.

In the high-pressure state with a supply flow rate of substantially zero, hydraulic oil circulates in the hydraulic system through the driven internal gear pump. The hydraulic oil having received heat in the internal gear pump can deliver the received heat to the outside of the internal gear pump. That is, even when the supply flow rate for the hydraulic device is zero or substantially zero, the internal gear pump is cooled with the hydraulic oil circulating in the hydraulic system. In a case where the high-pressure state with a supply flow rate of substantially zero continues for a long period of time, seizure of the internal gear pump is prevented.

On the other hand, in a case where the required flow rate of the hydraulic system is high, the valve closes the bypass path. Hydraulic oil discharged from the internal gear pump is supplied to the hydraulic device through the supply path. The hydraulic system can satisfy the required flow rate. The hydraulic system can be implemented over a wide flow rate range from a low flow rate to a high flow rate.

The internal gear pump may have a drain port through which hydraulic oil having leaked in the internal gear pump is discharged to the outside of the internal gear pump, and
the bypass path may be connected to the drain port.

The internal gear pump having the drain port can increase the amount of hydraulic oil discharged through the drain port, and accordingly, can decrease the flow rate of hydraulic oil discharged from the internal gear pump. The hydraulic system including the internal gear pump having the drain port can be implemented over a wide flow rate range from low to high. Moreover, the hydraulic system including the internal gear pump having the drain port can maintain the pressure of hydraulic oil high while decreasing the flow rate of hydraulic oil supplied to the hydraulic device.

The bypass path may be branched from the supply path connected to the internal gear pump.

In a case where the required flow rate is low, when the valve opens the bypass path, at least part of hydraulic oil discharged to the supply path from the internal gear pump returns to the tank through the bypass path. During driving, the internal gear pump can maintain the pressure of hydraulic oil in the supply path high. Meanwhile, at least part of hydraulic oil bypasses the hydraulic device, and therefore, the flow rate of hydraulic oil supplied to the hydraulic device decreases. The hydraulic system can maintain the pressure of hydraulic oil high while the supply flow rate for the hydraulic device is zero or substantially zero. Moreover, in a case where the high-pressure state with a flow rate of substantially zero continues for a long period of time, seizure of the internal gear pump is prevented.

The aircraft hydraulic system may further include a bypass path branched from the supply path connected to the internal gear pump and configured to return at least part of hydraulic oil from the internal gear pump to a tank so as to bypass the hydraulic device.

A valve of the bypass path can be omitted. Even without the valve on the bypass path, a combination of a change in the rotational speed of the internal gear pump and the bypass path connected to the internal gear pump can achieve implementation over a wide flow rate range from low to high and achieve the high-pressure state with a flow rate of substantially zero.

The internal gear pump may have a drain port through which hydraulic oil having leaked in the internal gear pump is discharged to the outside of the internal gear pump, and
the aircraft hydraulic system may further include a bypass path connected to the drain port and that returns hydraulic oil discharged from the drain port to a tank so as to bypass the hydraulic device.

This aircraft hydraulic system does not include a valve on the bypass path. As long as a drain passage of the internal gear pump is designed such that the flow rate of hydraulic oil discharged from the drain port is a proper flow rate, a change in the rotational speed of the internal gear pump can achieve both implementation over a wide flow rate range from low to high and the high-pressure state with a supply flow rate of substantially zero.

The internal gear pump may have
a shaft supporting the gear sets,
a housing supporting the shaft and housing the rotatable gear sets, and
a drain passage reaching the drain port opened in the housing from a high-pressure portion of the housing via a clearance between the gear sets and the housing and the periphery of the shaft.

As described above, by the combination of a change in the rotational speed of the internal gear pump and connection of the bypass path to the drain port in the aircraft hydraulic system, the multistage internal gear pump having the drain passage and the drain port can satisfy the requirement (1) that high-pressure hydraulic oil is supplied to the hydraulic device and the requirement (2) that the aircraft hydraulic system can be used over a wide flow rate range from a low flow rate to a high flow rate.

The hydraulic device may include a flight control actuator and an actuator for takeoff and landing.

The flight control actuator includes at least one of an aileron actuator, an elevator actuator, or a rudder actuator, for example. The flow rate of hydraulic oil required for operation of the flight control actuator is relatively low. Moreover, the flight control actuator may require the hydraulic system to continue the high-pressure state with a flow rate of substantially zero for a long period of time. For example, in a case where the angles of an aileron, an elevator, and a rudder are maintained at constant angles while the aircraft is in stable flight, the hydraulic system is required to continue the high-pressure state with a supply flow rate for the flight control actuator of substantially zero for a long period of time. The aileron actuator, the elevator actuator, and the rudder actuator are primary flight control actuators.

As secondary flight control actuators, the flight control actuator may include a flap actuator, a slat actuator, or both the flap actuator and the slat actuator. The flow rate of hydraulic oil required for operation of the secondary flight control actuator is a moderate flow rate, and the duration of operation of the secondary flight control actuator is relatively short.

The gear extension and retraction actuator includes, for example, at least one of a gear actuator that extends and retracts a landing gear, a door actuator that opens and closes a door of a landing gear bay, or a down lock release actuator that unlocks a down lock mechanism that fixes a landing gear in a extended state. The gear extension and retraction actuator has a long stroke, and therefore, requires a relatively-high flow rate of hydraulic oil for operation. Moreover, the duration of operation of the gear extension and retraction actuator is relatively short.

The above-described hydraulic system can change the discharge flow rate of the internal gear pump over a wide range from low to high, and can continue the high-pressure state with a supply flow rate for the flight control actuator of substantially zero for a long period of time. The hydraulic system is suitable for the hydraulic system for the aircraft including the flight control actuator and the gear extension and retraction actuator.

The technique disclosed here relates to an aircraft internal gear pump for supplying hydraulic oil to a hydraulic device of an aircraft. The aircraft internal gear pump includes
a shaft to which a prime mover is coupled,
a plurality of gear sets each of which includes a pinion gear supported by the shaft and a ring gear engaging with the pinion gear, the gear sets being arranged such that hydraulic oil ports are connected in series,
a housing supporting the shaft and housing the rotatable gear sets,
a drain port which is opened in the housing and through which hydraulic oil having leaked in the pump is discharged to the outside of the pump, and
a drain passage reaching the drain port from a high-pressure portion of the housing via a clearance between the gear sets and the housing and the periphery of the shaft.

The multistage internal gear pump having the drain passage and the drain port has a relatively-low volumetric efficiency. However, as described above, the multistage internal gear pump having a relatively-low volumetric efficiency is suitable for the hydraulic pump of the aircraft hydraulic system required to at least (1) supply high-pressure hydraulic oil to the hydraulic device and (2) be used over a wide flow rate range from a low flow rate to a high flow rate.

### ADVANTAGES OF THE INVENTION

As described above, the aircraft hydraulic system disclosed here can supply high-pressure hydraulic oil to the hydraulic device, and can be used over a wide flow rate range from low to high. Moreover, the aircraft internal gear pump disclosed here is suitable for the aircraft hydraulic system.

### BRIEF DESCRIPTION OF THE DRAWINGS

[FIG. 1] FIG. 1 shows an aircraft hydraulic system.
[FIG. 2] FIG. 2 shows, as an example, arrangement of hydraulic actuators of an aircraft.
[FIG. 3] FIG. 3 is a sectional view of an internal gear pump.
[FIG. 4] FIG. 4 is a sectional view of the internal gear pump taken along a direction orthogonal to the direction of a center axis.
[FIG. 5] FIG. 5 is an enlarged view of the inside of the internal gear pump.
[FIG. 6] FIG. 6 shows a variation of the aircraft hydraulic system.
[FIG. 7] FIG. 7 shows a variation of the aircraft hydraulic system.
[FIG. 8] FIG. 8 shows a variation of the aircraft hydraulic system.

### DESCRIPTION OF EMBODIMENTS

Hereinafter, an embodiment of an aircraft hydraulic system and an aircraft internal gear pump will be described with reference to the drawings. The aircraft hydraulic system and the aircraft internal gear pump described here are an example.

### (Configuration of Hydraulic System)

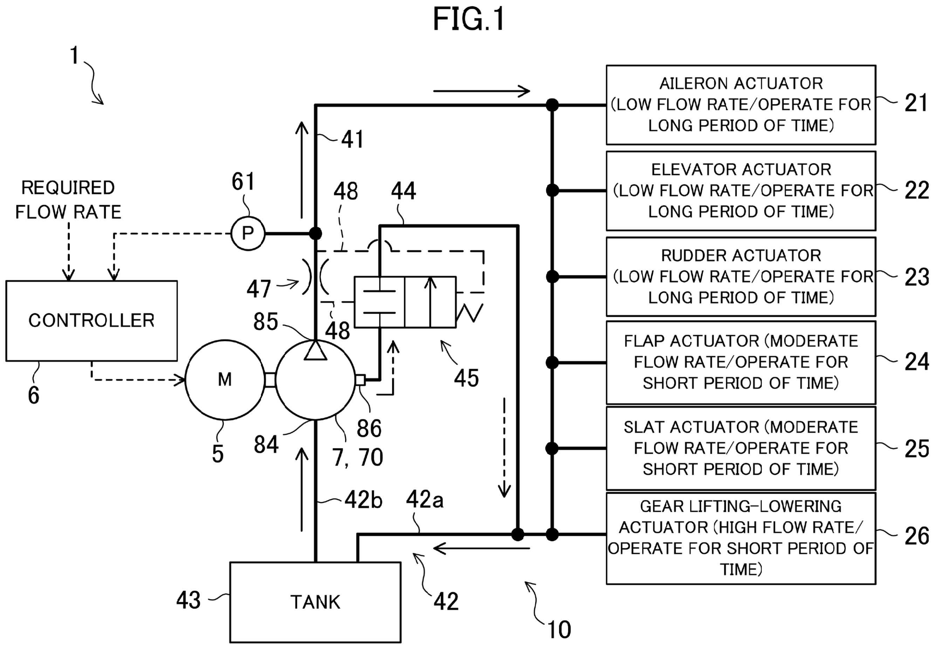

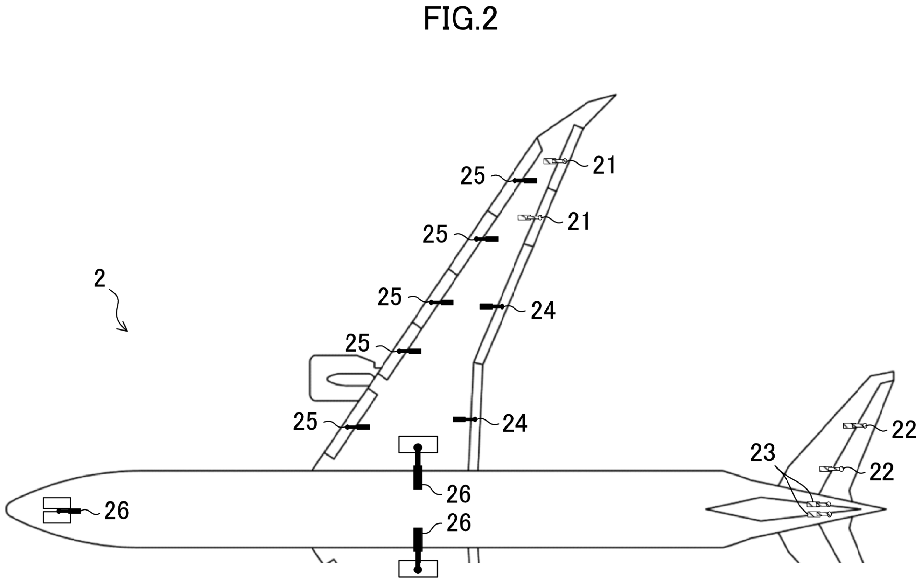

FIG. 1 shows a hydraulic system 1. The hydraulic system 1 is the aircraft hydraulic system. FIG. 2 shows an aircraft equipped with the hydraulic system 1. The hydraulic system 1 is a system for supplying hydraulic oil to a plurality of hydraulic devices. The hydraulic system 1 includes a hydraulic circuit 10 including the plurality of hydraulic devices.

The hydraulic devices include, as an example, the following hydraulic actuators 21 to 26. That is, as shown in FIG. 1 or 2, the hydraulic devices include an aileron actuator 21, an elevator actuator 22, a rudder actuator 23, a flap actuator 24, a slat actuator 25, and a gear extension and retraction actuator 26. The gear extension and retraction actuator 26 includes, for example, at least one of a gear actuator, a door actuator, or a down lock release actuator. The gear actuator is an actuator that extends and retracts a strut of a landing gear. The door actuator is an actuator that opens and closes a door of a landing gear bay where the landing gear is stored. The down lock release actuator is an actuator that unlocks a down lock mechanism that fixes the strut in an extended state.

Note that as shown in FIG. 2, an aircraft 2 has a plurality of hydraulic actuators as each of the aileron actuator 21, the elevator actuator 22, the rudder actuator 23, the flap actuator 24, the slat actuator 25, and the gear extension and retraction actuator 26. In the following description, each of the aileron actuator 21, the elevator actuator 22, the rudder actuator 23, the flap actuator 24, the slat actuator 25, and the gear extension and retraction actuator 26 includes a plurality of hydraulic actuators.

The hydraulic system 1 may supply hydraulic oil to some of the hydraulic actuators 21 to 26. The hydraulic system 1 may supply hydraulic oil to a hydraulic device other than the hydraulic actuators 21 to 26.

Each of the hydraulic actuators 21 to 26 is, for example, a telescopic actuator having a cylinder and a piston. The aileron actuator 21, the elevator actuator 22, and the rudder actuator 23 are flight control actuators to be operated during cruise flight and at the time of takeoff and landing of the aircraft 2. The flight control actuator has a relatively-short stroke, and is operated as needed over a long period of time during flight of the aircraft 2. A pressure required for operation of the flight control actuator is relatively high. Moreover, the flow rate of hydraulic oil required for operation of the flight control actuator is relatively low.

In some cases, the flight control actuator requires the hydraulic system 1 to maintain a high pressure with a flow rate of zero or substantially zero. For example, while the aircraft 2 is in stable flight, the angles of an aileron, an elevator, and a rudder are maintained at constant angles. That is, a supply flow rate for the flight control actuator is zero or substantially zero. Meanwhile, the pressure of hydraulic oil in the hydraulic circuit 10 is maintained high, and therefore, the responsiveness of the flight control actuator to an operation command increases. A state of the hydraulic circuit 10 being in a high-pressure state with a flow rate of zero or substantially zero continues for a long period of time in some cases.

The flight control actuator also includes the flap actuator 24 and the slat actuator 25. The flap actuator 24 and the slat actuator 25 are secondary flight control actuators. The flap actuator 24 and the slat actuator 25 have a moderate stroke, and are temporarily operated at the time of takeoff and landing of the aircraft 2. Note that the aileron actuator 21, the elevator actuator 22, and the rudder actuator 23 are primary flight control actuators. Hereinafter, the aileron actuator 21, the elevator actuator 22, the rudder actuator 23, the flap actuator 24, and the slat actuator 25 may be collectively referred to as flight control actuators 21 to 25.

The gear extension and retraction actuator 26 is an example of an actuator for takeoff and landing, which is operated at the time of takeoff and landing of the aircraft 2. The gear extension and retraction actuator 26 has a relatively-long stroke, and is temporarily operated at the time of takeoff and landing of the aircraft 2. A pressure required for operation of the gear extension and retraction actuator 26 is relatively high. Moreover, the flow rate of hydraulic oil required for operation of the gear extension and retraction actuator 26 is relatively high.

For the aircraft hydraulic system 1, the following performance requirements are made: (1) high-pressure hydraulic oil can be supplied to the hydraulic actuators 21 to 26; (2) the hydraulic system 1 can be used over a wide flow rate range from low to high; and (3) the state of the hydraulic circuit 10 being in the high-pressure state with a flow rate of zero or substantially zero can be maintained for a long period of time.

The hydraulic system 1 includes a hydraulic pump 7. The structure of the hydraulic pump 7 will be described later. A discharge port 85 of the hydraulic pump 7 is connected to a supply path 41. The supply path 41 is connected to each of the hydraulic actuators 21 to 26. Each of the hydraulic actuators 21 to 26 is parallel to the hydraulic pump 7. The hydraulic pump 7 separately supplies, via the supply path 41, hydraulic oil to the aileron actuator 21, the elevator actuator 22, the rudder actuator 23, the flap actuator 24, the slat actuator 25, and the gear extension and retraction actuator 26.

A suction port 84 of the hydraulic pump 7 is connected to a return path 42. The return path 42 connects the hydraulic pump 7 and each of the hydraulic actuators 21 to 26 to each other. A tank 43 is connected to the return path 42. The tank 43 is a reservoir that stores hydraulic oil. The return path 42 includes a first return path 42a from each of the hydraulic actuators 21 to 26 to the tank 43, and a second return path 42b from the tank 43 to the hydraulic pump 7.

The hydraulic circuit 10 is a circulation circuit formed by the hydraulic actuators 21 to 26, the hydraulic pump 7, the supply path 41, the return path 42, and the tank 43. As indicated by solid arrows in FIG. 1, hydraulic oil passes through the second return path 42b, the hydraulic pump 7, the supply path 41, the hydraulic actuators 21 to 26, and the first return path 42a from the tank 43, and then returns to the tank 43.

The hydraulic circuit 10 has a bypass path 44. Note that the bypass path 44 is not an element essential for the hydraulic system disclosed here. The bypass path 44 is connected to a drain port 86 (described later) of the hydraulic pump 7. The bypass path 44 is connected to the first return path 42a so as to bypass the hydraulic actuators 21 to 26.

The hydraulic circuit 10 has a valve 45. Note that the valve 45 is not an element essential for the hydraulic system disclosed here. The valve 45 is located in the middle of the bypass path 44. The valve 45 is an on-off valve, and switches the bypass path 44 between an open state and a closed state. The valve 45 is normally open. A pilot line 48 of the valve 45 indicated by a dashed line in FIG. 1 is connected to the upstream and downstream of an orifice 47 located on the supply path 41. In a case where a pressure difference across the orifice 47 is small, the valve 45 opens the bypass path 44. When the bypass path 44 is opened, hydraulic oil discharged from the drain port 86 returns to the tank 43 without being supplied to the hydraulic actuators 21 to 26, as indicated by chain-dash arrows in FIG. 1. In a case where the pressure difference across the orifice 47 is great, the valve 45 closes the bypass path 44. When the bypass path 44 is closed, discharge of hydraulic oil from the drain port 86 stops.

A prime mover is coupled to the hydraulic pump 7. The prime mover drives the hydraulic pump 7. The prime mover may be, for example, an electric motor 5. The electric motor 5 may be, for example, a servo motor. The prime mover may be an engine.

A controller 6 is electrically connected to the electric motor 5. Moreover, a pressure sensor 61 is electrically connected to the controller 6. Note that the pressure sensor 61 is not an element essential for the hydraulic system disclosed here. The pressure sensor 61 is connected to the supply path 41. The pressure sensor 61 outputs, to the controller 6, a measurement signal corresponding to the pressure of hydraulic oil in the supply path 41. The pressure of hydraulic oil in the supply path 41 relates to the supply flow rate for the hydraulic actuators 21 to 26 and a required flow rate for the hydraulic actuators 21 to 26.

The controller 6 is connected to a host controller. The host controller is, for example, a flight controller. The controller 6 receives a signal output from the host controller and indicating the required flow rate. The required flow rate is the flow rate of hydraulic oil required for operating the flight control actuators 21 to 25, the gear extension and retraction actuator 26, or both the flight control actuators 21 to 25 and the gear extension and retraction actuator 26. The host controller transmits the signal indicating the required flow rate to the controller 6 in response to operation made by a pilot of the aircraft 2, the flight condition of the aircraft 2, or both the operation and the flight condition.

The controller 6 outputs, to the electric motor 5, a control signal corresponding to the measurement signal of the pressure sensor 61 and the signal output from the host controller and indicating the required flow rate. The rotational speed of the electric motor 5 changes according to the control signal from the controller 6. With a change in the rotational speed of the electric motor 5, the rotational speed of the hydraulic pump 7 changes, and the discharge flow rate of the hydraulic pump 7 changes. In response to supply of hydraulic oil from the hydraulic pump 7, the flight control actuators 21 to 25, the gear extension and retraction actuator 26, or both the flight control actuators 21 to 25 and the gear extension and retraction actuator 26 operate. Details of control of the hydraulic system 1 will be described later.

Note that the sensor of the hydraulic system 1 is not limited to the pressure sensor 61. The hydraulic system 1 may include a plurality of electric hydraulic pumps including the hydraulic pump 7 and the electric motor 5 for redundancy.

### (Structure of Pump)

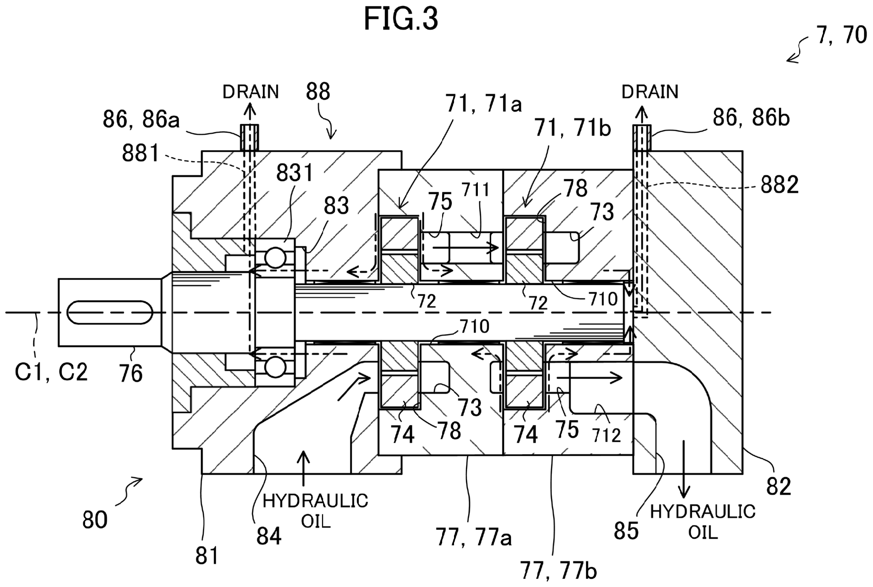

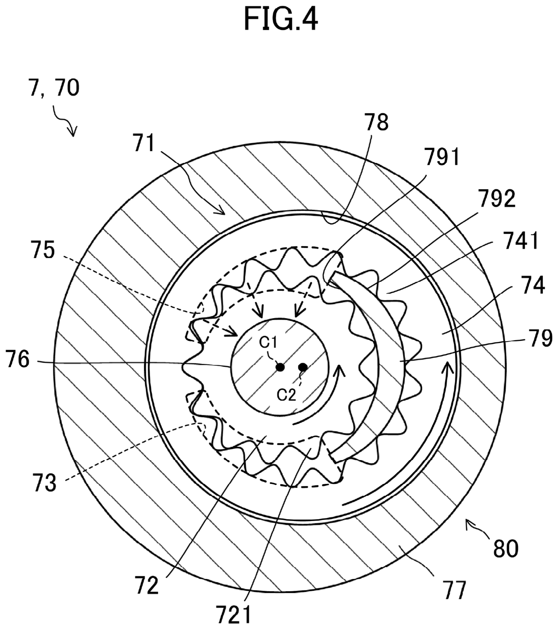

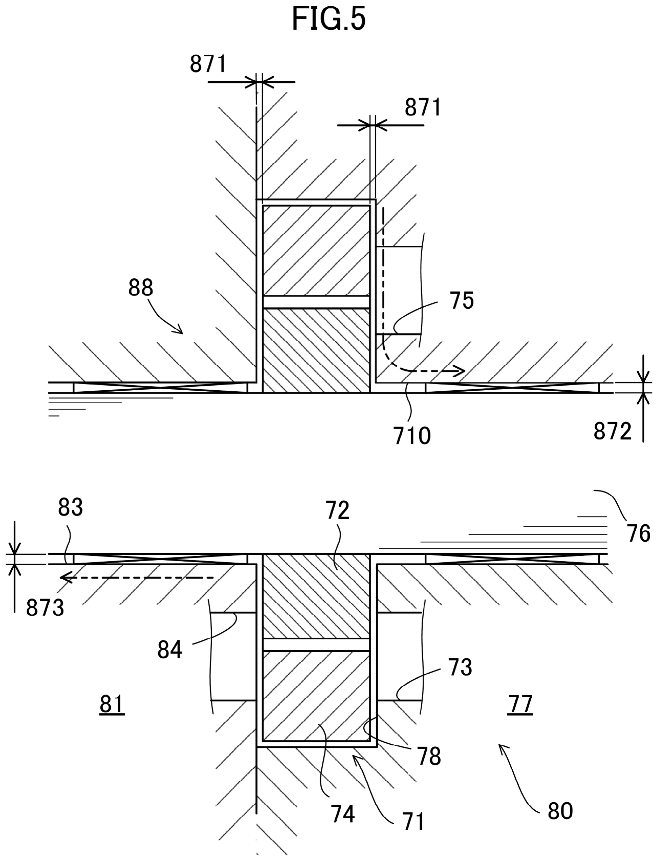

FIG. 3 shows, as an example, the section of the hydraulic pump 7. FIG. 4 is a sectional view of the hydraulic pump 7 taken along a direction orthogonal to the direction of a center axis. FIG. 5 shows, in close-up, part of the section of the hydraulic pump 7. A hydraulic pump of a conventional aircraft hydraulic system is a piston pump. The piston pump has a relatively-high volumetric efficiency and an excellent efficiency under a high pressure. A variable capacity piston pump can change the supply flow rate for the hydraulic actuators 21 to 26. On the other hand, the hydraulic pump 7 of the aircraft hydraulic system 1 disclosed here is a multistage internal gear pump 70.

The internal gear pump 70 includes a plurality of gear sets. The internal gear pump 70 of the example shown in the figure includes two gear sets 71 which are a first gear set 71a and a second gear set 71b. The number of gear sets 71 is determined according to a discharge pressure required for the internal gear pump 70. The number of gear sets 71 is not limited to two, and may be three or more. Note that hereinafter, the first and second gear sets 71a, 71b may be merely collectively referred to as a gear set(s) 71.

The first gear set 71a and second gear set 71b are arranged with a gap therebween along a shaft 76 of the internal gear pump 70. The shaft 76 extends in the left-right direction in the plane of paper of FIG. 3. The shaft 76 is a rotary shaft rotatable about a center axis. The above-described electric motor 5 is coupled to a first end, that is, the left end in FIG. 3, of the shaft 76. Note that in the following description, a direction in which the shaft 76 extends may be referred to as the axial direction of the internal gear pump 70.

The gear set 71 has a pinion gear 72 and a ring gear 74. The pinion gear 72 is fixed to the shaft 76. The pinion gear 72 and the shaft 76 are coaxial with each other. When the shaft 76 rotates, the pinion gear 72 rotates together with the shaft 76. The pinion gears 72 of the first and second gear sets 71a, 71b rotate in the same direction. As shown in FIG. 4, the pinion gear 72 has external teeth 721.

The ring gear 74 engages with the pinion gear 72. The ring gear 74 has internal teeth 741 in the inner peripheral surface. In the left region in the plane of paper of FIG. 4, some of the external teeth 721 of the pinion gear 72 engage with some of the internal teeth 741 of the ring gear 74. The ring gear 74 is eccentric with respect to the shaft 76. C1 of FIG. 4 indicates the axis of rotation of the pinion gear 72, and C2 indicates the axis of rotation of the ring gear 74.

The internal gear pump 70 includes a housing 80. The housing 80 includes a gear housing 77, a front cover 81, and a back cover 82. Note that the structure of the housing 80 described below is an example. Various structures can be adopted as the housing structure of the multistage internal gear pump 70.

The gear housing 77 houses the gear set 71. The gear housing 77 of the internal gear pump 70 includes two gear housings 77, which are a first gear housing 77a and a second gear housing 77b, corresponding to the first and second gear sets 71a, 71b. The first and second gear housings 77a, 77b are arranged along the shaft 76. The first and second gear housings 77a, 77b are integrated by being fixed to each other. Note that hereinafter, the first and second gear housings 77a, 77b may be merely collectively referred to as a gear housing(s) 77.

The gear housing 77 has a recess 78. The gear set 71 is housed in the recess 78. As also shown in FIG. 5, the recess 78 is opened in a first side surface of the gear housing 77, and is recessed in the axial direction of the internal gear pump 70 from the first side surface. In FIG. 3 or 5, the first side surface is the left side surface of the gear housing 77. As shown in FIG. 4, the recess 78 has a circular shape when viewed along the axis of the internal gear pump 70. The pinion gear 72 and the ring gear 74 are rotatable in the recess 78.

The gear housing 77 has a crescent 79. The crescent 79 is located at a position at which the pinion gear 72 and the ring gear 74 disengage from each other in the recess 78. Specifically, in the recess 78, the crescent 79 is located in the right region in the plane of paper of FIG. 4. The crescent 79 has a crescent moon shape when viewed along the axis of the internal gear pump 70.

The tips of the external teeth 721 of the pinion gear 72 contact a first arc wall 791 of the crescent 79. The tips of the internal teeth 741 of the ring gear 74 contact a second arc wall 792 of the crescent 79. Both the first arc wall 791 and the second arc wall 792 are fixed walls which do not move to the external teeth 721 and the internal teeth 741. The internal gear pump 70 is a fixed capacity pump having a constant pump capacity.

The gear housing 77 has a through-hole 710. The through-hole 710 penetrates the gear housing 77 in the axial direction of the internal gear pump 70. The shaft 76 is located in the through-hole 710. The shaft 76 extends over the entirety of the integrated first and second gear housings 77a, 77b.

The gear housing 77 has a first port 73 and a second port 75. The first port 73 faces a port for sucking hydraulic oil into the recess 78. As indicated by a dashed line in FIG. 4, the first port 73 communicates with the recess 78. The opening of the first port 73 extends in a circumferential direction in the vicinity of the first end of the crescent-moon-shaped crescent 79. The second port 75 is a port for discharging hydraulic oil from the recess 78. As indicated by a dashed line in FIG. 4, the second port 75 communicates with the recess 78. The opening of the second port 75 extends in the circumferential direction in the vicinity of a second end of the crescent-moon-shaped crescent 79. The opening of the first port 73 and the opening of the second port 75 are located on the opposite sides with respect to the shaft 76. Note that as shown in FIG. 3, the positions of the first port 73 and second port 75 of the first gear housing 77a and the positions of the first port 73 and second port 75 of the second gear housing 77b are inverted from each other with respect to the shaft 76.

The first gear housing 77a has a first communication path 711. The first communication path 711 allows the second port 75 of the first gear housing 77a and the first port 73 of the second gear housing 77b to communicate with each other. The second port 75 corresponds to a discharge portion of a first stage, and the first port 73 corresponds to a suction portion of a second stage subsequent to the first stage. The second gear housing 77b has a second communication path 712. The second communication path 712 allows the second port 75 of the second gear housing 77b and the discharge port 85 (described later) to communicate with each other.

The front cover 81 is located next to the first gear housing 77a in the axial direction of the internal gear pump 70. The front cover 81 is fixed to the first gear housing 77a.

The front cover 81 has a support hole 83. The support hole 83 penetrates the front cover 81 in the axial direction of the internal gear pump 70. The shaft 76 penetrates the support hole 83. The shaft 76 is supported by a bearing 831 fixed to the support hole 83.

The front cover 81 has the suction port 84. The inlet of the suction port 84 opens on the side surface of the front cover 81, and is connected to the return path 42 of the hydraulic circuit 10. The outlet of the suction port 84 opens on the rear surface of the front cover 81. In a state of the front cover 81 being fixed to the first gear housing 77a, the outlet of the suction port 84 faces the first port 73 of the first gear housing 77a, and communicates with the recess 78.

The back cover 82 is located next to the second gear housing 77b in the axial direction of the internal gear pump 70. The back cover 82 is fixed to the second gear housing 77b.

The back cover 82 has the discharge port 85. The inlet of the discharge port 85 opens on the front surface of the back cover 82. In a state of the back cover 82 being fixed to the second gear housing 77b, the inlet of the discharge port 85 communicates with the second port 75 of the second gear housing 77b via the second communication path 712. The outlet of the suction port 84 opens on the side surface of the back cover 82, and is connected to the supply path 41 of the hydraulic circuit 10.

Next, operation of the internal gear pump 70 will be briefly described. When the shaft 76 is rotated counterclockwise in FIG. 4 by the electric motor 5, the pinion gear 72 and ring gear 74 of each of the first and second gear sets 71a, 71b rotate.

In the recess 78 of the first gear housing 77a, hydraulic oil is sucked to between the external teeth 721 of the pinion gear 72 and the internal teeth 741 of the ring gear 74 through the suction port 84 as the external teeth 721 and the internal teeth 741 engaging with each other disengage from each other. The sucked hydraulic oil is delivered to the second port 75 along with rotation of the pinion gear 72 and the ring gear 74.

In the recess 78 of the first gear housing 77a, the external teeth 721 and the internal teeth 741 disengaging from each other gradually approach each other and engage with each other. As a result of engagement of the external teeth 721 and the internal teeth 741, the hydraulic oil is discharged from between the external teeth 721 and the internal teeth 741 to the second port 75 of the first gear housing 77a.

The hydraulic oil discharged to the second port 75 of the first gear housing 77a reaches the recess 78 of the second gear housing 77b through the first communication path 711. Similarly, in the recess 78 of the second gear housing 77b, hydraulic oil sucked to between the external teeth 721 and the internal teeth 741 through the first communication path 711 and the first port 73 is discharged to the second port 75 of the second gear housing 77b along with rotation of the pinion gear 72 and the ring gear 74. The hydraulic oil discharged to the second port 75 of the second gear housing 77b is sent to the supply path 41 through the second communication path 712 and the discharge port 85. The pressure of hydraulic oil increases in each of the first gear set 71a and the second gear set 71b whose discharge portion and suction portion are connected in series, and therefore, the multistage internal gear pump 70 can discharge high-pressure hydraulic oil.

### (Characteristic Structure of Internal Gear Pump)

The internal gear pump 70 shown in FIG. 3 or 4 has a characteristic that the internal gear pump 70 includes an external drain in addition to a characteristic that the internal gear pump 70 is the multistage high-pressure pump. More specifically, the internal gear pump 70 has the drain port 86. The drain port 86 is a port for discharging hydraulic oil having leaked in the internal gear pump 70 to the outside of the internal gear pump 70. The internal gear pump 70 has a first drain port 86a and a second drain port 86b. The first drain port 86a is attached to the front cover 81. The second drain port 86b is attached to the back cover 82. Note that the number of drain ports can be set to an arbitrary number.

The internal gear pump 70 has a drain passage 88. Specifically, as shown in FIGS. 3 and 5, in the internal gear pump 70 disclosed here, the drain passage 88 includes a first clearance 871, a second clearance 872, a third clearance 873, a first passage 881, and a second passage 882. The structure of the drain passage 88 disclosed here is an example.

The first clearance 871 is a clearance between the gear set 71 and an inner wall of the housing 80. The second clearance 872 is a clearance between the shaft 76 and the inner peripheral surface of the through-hole 710 of the gear housing 77. The third clearance 873 is a clearance between the shaft 76 and the inner peripheral surface of the support hole 83 of the front cover 81. The first passage 881 is a passage formed in the front cover 81 and connecting the support hole 83 and the first drain port 86a to each other. The second passage 882 is a passage formed in the back cover 82 and connecting the through-hole 710 of the second gear housing 77b and the second drain port 86b to each other.

During driving of the internal gear pump 70, part of hydraulic oil whose pressure has increased in the recess 78 reaches the second clearance 872 from the high-pressure second port 75 and the periphery thereof, that is, a high-pressure portion of the housing 80, through the first clearance 871 due to a pressure difference in the drain passage 88 as indicated by dash-dot-dot arrows in FIG. 3, 4, or 5. In the second clearance 872, the hydraulic oil flows to the first end (that is, left end in FIG. 3) or second end (that is, right end in FIG. 3) of the shaft 76 along the shaft 76. The hydraulic oil having flowed to the first end of the shaft 76 reaches the first passage 881 from the third clearance 873 through the bearing 831, and is discharged to the outside of the internal gear pump 70 through the first drain port 86a. The hydraulic oil having flowed to the second end of the shaft 76 reaches the second passage 882, and is discharged to the outside of the internal gear pump 70 through the second drain port 86b.

Here, each of the clearances 871, 872, 873 forming the drain passage 88 is set to an appropriate size. The size of each of the clearances 871, 872, 873 may be set to a larger size such that internal leakage is greater as compared to a general internal gear pump. The multistage internal gear pump 70 configured such that leakage is relatively greater, in other words, having a relatively-low volumetric efficiency, is suitable for the hydraulic pump 7 of the aircraft hydraulic system 1 as described later.

Moreover, the drain passage 88 is located at a position at which the gear set 71 and the housing 80 slide on each other, a position at which the shaft 76 and the housing 80 slide on each other, and the position of the bearing 831, and therefore, also contributes to lubrication, cooling, or both lubrication and cooling of the internal gear pump 70.

### (Control of Hydraulic System)

The controller 6 changes the discharge flow rate of the internal gear pump 70 via control of the electric motor 5. Specifically, the controller 6 outputs, to the electric motor 5, a control signal for increasing the rotational speed of the electric motor 5 in a case where the supply flow rate for the hydraulic actuators 21 to 26 falls below the required flow rate for the hydraulic actuators 21 to 26 based on the required flow rate from the host controller and the measurement signal of the pressure sensor 61. Moreover, the controller 6 outputs, to the electric motor 5, a control signal for decreasing the rotational speed of the electric motor 5 in a case where the supply flow rate for the hydraulic actuators 21 to 26 exceeds the required flow rate for the hydraulic actuators 21 to 26.

During cruise flight of the aircraft 2, the primary flight control actuators, that is, the aileron actuator 21, the elevator actuator 22, and the rudder actuator 23, operate. The secondary flight control actuators, that is, the flap actuator 24 and the slat actuator 25, and the gear extension and retraction actuator 26 do not operate during cruise flight of the aircraft 2. The required flow rate for the primary flight control actuators 21 to 23 is relatively low. During cruise flight of the aircraft 2, the required flow rate for the hydraulic actuators 21 to 26 is low.

In a case where the required flow rate for the hydraulic actuators 21 to 26 is low during cruise flight of the aircraft 2, the flow rate in the supply path 41 is low, and therefore, the pressure difference across the orifice 47 is small. The valve 45 opens the bypass path 44. When the bypass path 44 is opened, the amount of hydraulic oil discharged from the drain port 86 of the internal gear pump 70 increases. The flow rate of hydraulic oil discharged from the discharge port 85 of the internal gear pump 70 decreases. The hydraulic system 1 can satisfy the required flow rate, which is low, for the primary flight control actuators 21 to 23 during cruise flight.

As described above, in a case where the state of the high pressure being maintained with a flow rate of zero or substantially zero is required for the hydraulic system 1 during stable flight of the aircraft 2, the internal gear pump 70 is driven with the bypass path 44 open. Driving of the internal gear pump 70 maintains the pressure of the hydraulic circuit 10 high. During driving, the internal gear pump 70 discharges hydraulic oil to the outside of the internal gear pump 70 through the drain port 86. The hydraulic oil discharged through the drain port 86 returns to the tank 43 through the bypass path 44 and the first return path 42a. The hydraulic system 1 can maintain the pressure of the hydraulic circuit 10 high with a supply flow rate of zero or substantially zero for the hydraulic actuators 21 to 26.

The internal gear pump 70 is driven, but discharge of hydraulic oil through the discharge port 85 is limited. Thus, seizure of the internal gear pump 70 may occur. However, the internal gear pump 70 can discharge hydraulic oil through the drain port 86. The hydraulic oil discharged through the drain port 86 receives heat in the internal gear pump 70. Even if a state of the flow rate in the supply path 41 being low or zero continues for a long period of time, an increase in the temperature of the internal gear pump 70 is suppressed. The internal gear pump 70 having the drain port 86 has a self-cooling function.

The hydraulic system 1 including the combination of the multistage internal gear pump 70 having the external drain, the bypass path 44, and the valve 45 can maintain the state of the hydraulic circuit 10 being in the high-pressure state with a flow rate of zero or substantially zero for a long period of time. The hydraulic system 1 is suitable for a system that supplies hydraulic oil to the primary flight control actuators 21 to 23 of the aircraft 2.

At the time of takeoff and landing of the aircraft 2, the secondary flight control actuators 24 to 25 and the gear extension and retraction actuator 26 operate in addition to the primary flight control actuators 21 to 23. The required flow rate for the secondary flight control actuators 24 to 25 and the gear extension and retraction actuator 26 is relatively high. The opened bypass path 44 is disadvantageous in satisfying the required flow rate for the hydraulic actuators 21 to 26.

In a case where the required flow rate for the hydraulic actuators 21 to 26 is high at the time of takeoff and landing of the aircraft 2, the flow rate in the supply path 41 is high, and therefore, the pressure difference across the orifice 47 is great. The valve 45 closes the bypass path 44. All hydraulic oil discharged from the internal gear pump 70 is supplied to the hydraulic actuators 21 to 26. The hydraulic system 1 can satisfy the flow rate required for operation of the primary flight control actuators 21 to 23, the secondary flight control actuators 24 to 25, and the gear extension and retraction actuator 26 at the time of takeoff and landing. Note that the controller 6 increases the rotational speed of the electric motor 5 as necessary.

Thus, the hydraulic system 1 can be used over a wide range from a low flow rate to a high flow rate. Each of the primary flight control actuators 21 to 23, the secondary flight control actuators 24 to 25, and the gear extension and retraction actuator 26 can properly operate. Note that the pressure difference across the orifice 47, which relates to switching of opening and closing of the valve 45, can be set to an appropriate pressure difference. Considering the performance of the internal gear pump 70, the pressure difference across the orifice 47 for opening and closing the valve 45, that is, a threshold relating to the required flow rate for the hydraulic actuators 21 to 26, is set such that the hydraulic system 1 satisfies the above-described requirements (1), (2), and (3). The valve 45 opens the bypass path 44 in a case where the required flow rate for the hydraulic actuators 21 to 26 exceeds the set threshold, and closes the bypass path 44 in a case where the required flow rate is the threshold or less.

A general single-stage internal gear pump has a low pump efficiency under a high pressure, and the seizure easily occurs under a high pressure. The above-described internal gear pump 70 is the multistage internal gear pump 70 configured such that the ports of the plurality of gear sets 71a, 71b are connected in series. The multistage internal gear pump 70 can increase the pressure of hydraulic oil in each of the plurality of gear sets 71a, 71b. A load in each of the gear sets 71a, 71b is low. The multistage internal gear pump 70 can discharge high-pressure hydraulic oil. The multistage internal gear pump 70 is suitable for the hydraulic pump 7 of the aircraft hydraulic system 1 required to supply high-pressure hydraulic oil to the hydraulic actuators 21 to 26.

The internal gear pump 70 is not a variable capacity pump, but is a fixed capacity pump. The internal gear pump 70 itself cannot change its discharge flow rate. However, the controller 6 changes the rotational speed of the internal gear pump 70 via control of the electric motor 5, and in this manner, the internal gear pump 70 can be used over a wide flow rate range from low to high.

The aircraft internal gear pump 70 does not have, for example, a structure in which internal leakage is reduced by narrowing a clearance of a sliding portion between a gear set and a housing. Internal leakage in the aircraft internal gear pump 70 is relatively great, and the internal gear pump 70 has the drain port 86 through which hydraulic oil having leaked inside is discharged to the outside of the internal gear pump 70. This makes it possible, by driving of the internal gear pump 70, to maintain the pressure of the hydraulic circuit 10 high while the flow rate of hydraulic oil discharged from the discharge port 85 is zero or substantially zero. Thus, the internal gear pump 70 is suitable for the hydraulic pump 7 of the aircraft hydraulic system 1.

### (Variations)

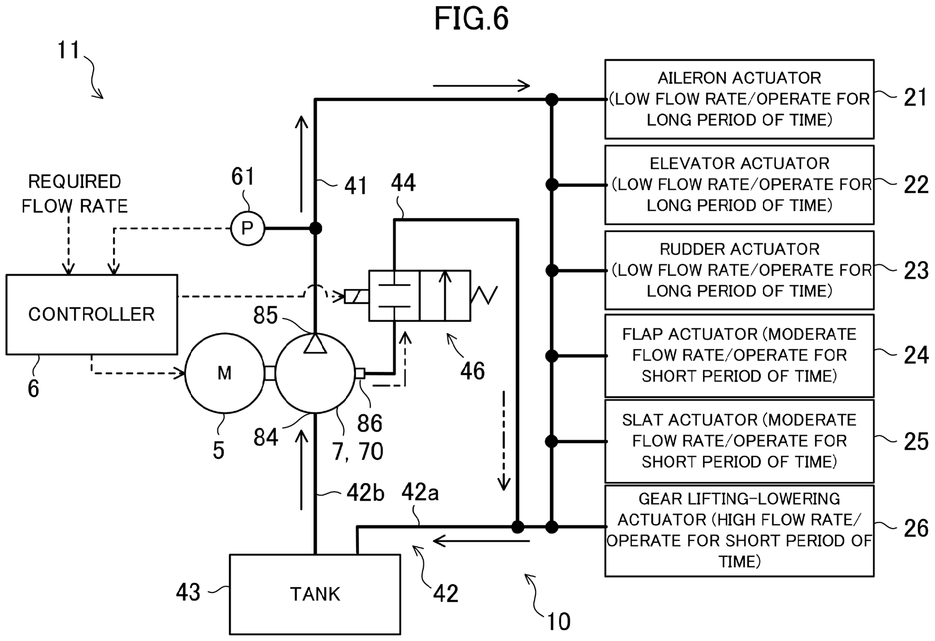

FIG. 6 shows a hydraulic system 11 according to a variation. The hydraulic system 11 has an electromagnetic valve 46 instead of the valve 45 to be opened and closed according to the pressure difference. The electromagnetic valve 46 is electrically connected to the controller 6. The electromagnetic valve 46 opens and closes the bypass path 44 in response to the control signal from the controller 6.

Specifically, in a case where the required flow rate for the hydraulic actuators 21 to 26 is low during cruise flight of the aircraft 2, the controller 6 outputs the control signal to the electromagnetic valve 46 to open the bypass path 44. During cruise flight, the hydraulic system 11 can maintain the hydraulic circuit 10 in the high-pressure state while satisfying the required flow rate for the primary flight control actuators 21 to 23. Moreover, an increase in the temperature of the internal gear pump 70 is suppressed.

In a case where the required flow rate for the hydraulic actuators 21 to 26 is high at the time of takeoff and landing of the aircraft 2, the controller 6 outputs the control signal to the electromagnetic valve 46 to close the bypass path 44. At the time of takeoff and landing, the hydraulic system 11 can satisfy the required flow rate for operation of the primary flight control actuators 21 to 23, the secondary flight control actuators 24 to 25, and the gear extension and retraction actuator 26.

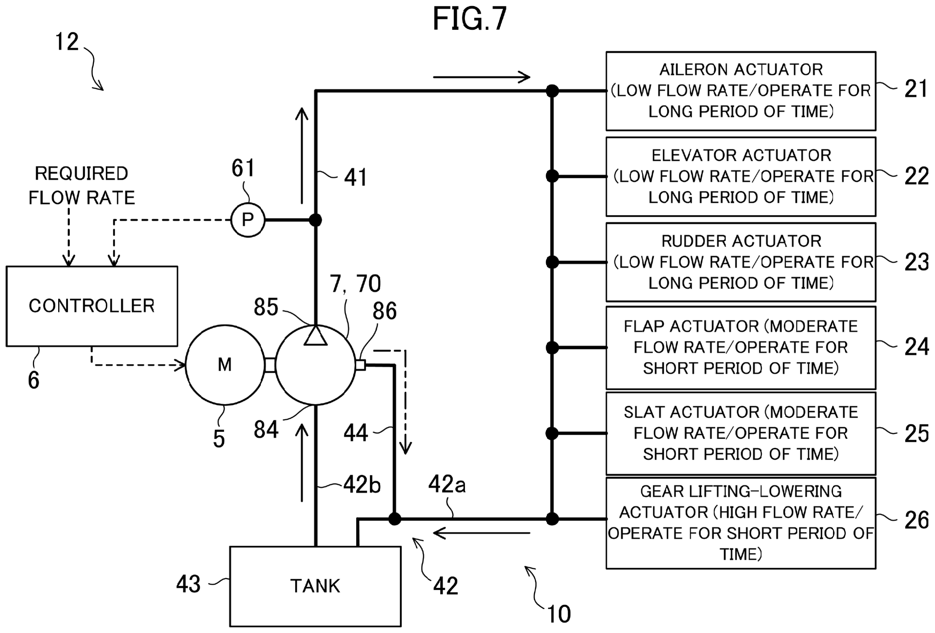

FIG. 7 shows a hydraulic system 12 according to another variation. In the hydraulic system 12, the valve 45 and the electromagnetic valve 46 are omitted. The valve 45 and the electromagnetic valve 46 are not elements essential for the aircraft hydraulic system disclosed here. As long as the above-described performance requirements for the aircraft hydraulic system, which are (1) high-pressure hydraulic oil can be supplied to the hydraulic actuators 21 to 26; (2) the aircraft hydraulic system can be used over a wide flow rate range from low to high; and (3) the state of the hydraulic circuit 10 being in the high-pressure state with a flow rate of zero or substantially zero can be maintained for a long period of time, can be satisfied by changing the rotational speed of the internal gear pump 70, the valve 45 and the electromagnetic valve 46 can be omitted in the hydraulic system 12.

That is, as long as the shape, structure, or both shape and structure of the drain passage 88 of the internal gear pump 70 are properly set, without opening and closing the bypass path 44, (a) hydraulic oil can be supplied to the hydraulic actuators 21 to 26 over a wide flow rate range from low to high by control of the rotational speed of the internal gear pump 70 based on the control signal from the controller 6, and (b) hydraulic oil can be discharged from the internal gear pump 70 through the drain port 86 in the state of the hydraulic circuit 10 being in the high-pressure state with a required flow rate of zero or substantially zero.

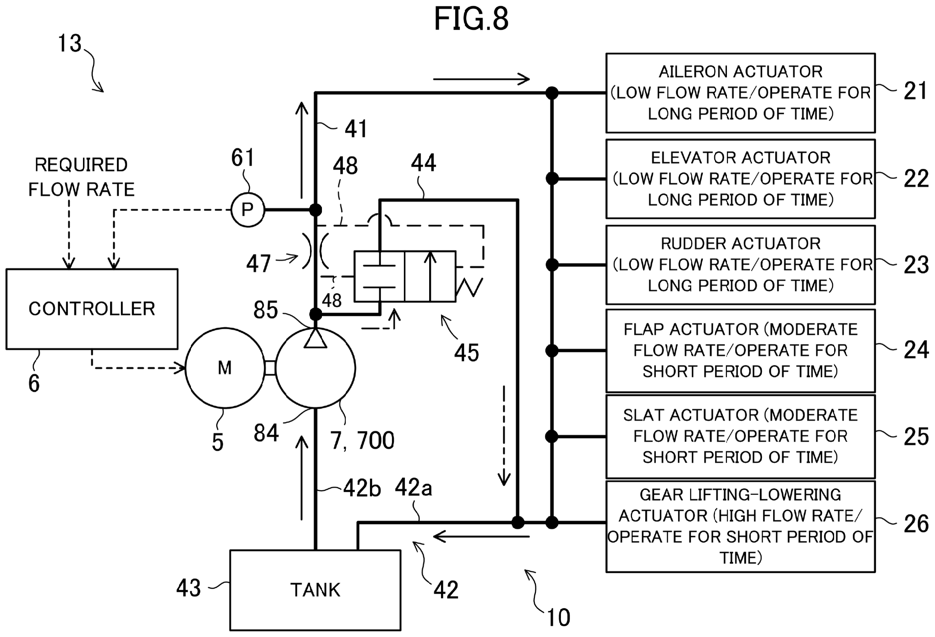

FIG. 8 shows a hydraulic system 13 according to still another variation. An internal gear pump 700 of the hydraulic system 13 has no drain port 86. The bypass path 44 is connected to upstream of the orifice 47 on the supply path 41. The bypass path 44 is indirectly connected to the internal gear pump 700. When the bypass path 44 is opened, at least part of hydraulic oil discharged from the discharge port 85 of the internal gear pump 700 returns to the tank 43 through the bypass path 44. During cruise flight of the aircraft 2, the hydraulic system 13 can satisfy the required flow rate for the hydraulic actuators 21 to 26. Similarly to the above-described hydraulic system 1, the hydraulic system 13 can suppress an increase in the temperature of the internal gear pump 700 in a case where the required flow rate for the hydraulic actuators 21 to 26 is zero or substantially zero.

With the bypass path 44 closed, all hydraulic oil discharged from the discharge port 85 is supplied to the hydraulic actuators 21 to 26. The hydraulic system 13 can satisfy the required flow rate for the hydraulic actuators 21 to 26 at the time of takeoff and landing of the aircraft 2.

Note that the aircraft hydraulic system disclosed here is not limited to the above-described hydraulic system for controlling the primary flight control actuators 21 to 23, the secondary flight control actuators 24 to 25, and the gear extension and retraction actuator 26. The aircraft hydraulic system may be a hydraulic system for controlling only the primary flight control actuators 21 to 23, only the secondary flight control actuators 24 to 25, or the primary flight control actuators 21 to 23 and the secondary flight control actuators 24 to 25. The aircraft hydraulic system may be a hydraulic system for controlling the gear extension and retraction actuator 26. The aircraft hydraulic system may be a hydraulic system for controlling other actuators.

The hydraulic devices to which the hydraulic system supplies hydraulic oil include a hydraulic motor in addition to the hydraulic actuator.

The above-described configurations of the plurality of hydraulic systems can be combined within a range possible. For example, the hydraulic system 13 shown in FIG. 8 may include the electromagnetic valve 46 of FIG. 6 instead of the valve 45.

For example, in the hydraulic system 13 shown in FIG. 8, the valve 45 and the orifice 47 may be omitted.

### DESCRIPTION OF REFERENCE CHARACTERS

- 1: Hydraulic System
- 11: Hydraulic System
- 12: Hydraulic System
- 13: Hydraulic System
- 2: Aircraft
- 21: Aileron Actuator (Hydraulic Device, Flight Control Actuator)
- 22: Elevator Actuator (Hydraulic Device, Flight Control Actuator)
- 23: Rudder Actuator (Hydraulic Device, Flight Control Actuator)
- 24: Flap Actuator (Hydraulic Device, Flight Control Actuator)
- 25: Slat Actuator (Hydraulic Device, Flight Control Actuator)
- 26: Gear Extension and Retraction Actuator (Hydraulic Device, Actuator for Takeoff and Landing)
- 41: Supply Path
- 43: Tank
- 44: Bypass Path
- 45: Valve
- 5: Electric Motor (Prime Mover)
- 6: Controller
- 7: Hydraulic Pump
- 70: Internal Gear Pump
- 700: Internal Gear Pump
- 71: Gear Set
- 71a: First Gear Set
- 71b: Second Gear Set
- 72: Pinion Gear
- 73: First Port
- 74: Ring Gear
- 75: Second Port
- 76: Shaft
- 80: Housing
- 85: Discharge Port
- 86: Drain Port
- 86a: First Drain Port
- 86b: Second Drain Port
- 88: Drain Passage

## Claims

1. An aircraft hydraulic system comprising:
a hydraulic pump connected to at least one hydraulic device of an aircraft via a supply path and that supplies hydraulic oil to the hydraulic device through the supply path;
a prime mover coupled to the hydraulic pump and that drives the hydraulic pump;
and
a controller electrically connected to the prime mover and that changes a rotational speed of the hydraulic pump according to a required flow rate for the hydraulic device via control of the prime mover,
wherein the hydraulic pump is a multistage internal gear pump having a plurality of gear sets, each of which includes a pinion gear and a ring gear engaging with each other, the internal gear pump being arranged such that a discharge portion of each stage is connected in series to a suction portion of a subsequent stage.

2. The aircraft hydraulic system of claim 1, further comprising:
a bypass path directly or indirectly connected to the internal gear pump and that returns at least part of hydraulic oil from the internal gear pump to a tank so as to bypass the hydraulic device; and
a valve located on the bypass path and that opens the bypass path in a case where the required flow rate is low and closes the bypass path in a case where the required flow rate is high.

3. The aircraft hydraulic system of claim 2, wherein
the internal gear pump has a drain port through which hydraulic oil having leaked in the internal gear pump is discharged to an outside of the internal gear pump, and
the bypass path is connected to the drain port.

4. The aircraft hydraulic system of claim 2, wherein
the bypass path is branched from the supply path connected to the internal gear pump.

5. The aircraft hydraulic system of claim 1, further comprising:
a bypass path branched from the supply path connected to the internal gear pump and that returns at least part of hydraulic oil from the internal gear pump to a tank so as to bypass the hydraulic device.

6. The aircraft hydraulic system of claim 1,
the internal gear pump having a drain port through which hydraulic oil having leaked in the internal gear pump is discharged to an outside of the internal gear pump,
the aircraft hydraulic system further comprising:
a bypass path connected to the drain port and that returns hydraulic oil discharged from the drain port to a tank so as to bypass the hydraulic device.

7. The aircraft hydraulic system of claim 3 or 6, wherein
the internal gear pump has
a shaft supporting the gear sets,
a housing supporting the shaft and housing the rotatable gear sets, and
a drain passage reaching the drain port opened in the housing from a high-pressure portion of the housing via a clearance between the gear sets and the housing and a periphery of the shaft.

8. The aircraft hydraulic system of any one of claims 1 to 6, wherein
the hydraulic device includes a flight control actuator and an actuator for takeoff and landing.

9. An aircraft internal gear pump for supplying hydraulic oil to a hydraulic device of an aircraft, comprising:
a shaft to which a prime mover is coupled;
a plurality of gear sets each of which includes a pinion gear supported by the shaft and a ring gear engaging with the pinion gear, the gear sets being arranged such that hydraulic oil ports are connected in series;
a housing supporting the shaft and housing the rotatable gear sets;
a drain port which is opened in the housing and through which hydraulic oil having leaked in the pump is discharged to an outside of the pump; and
a drain passage reaching the drain port from a high-pressure portion of the housing via a clearance between the gear sets and the housing and a periphery of the shaft.
